# EUROPEAN PATENT APPLICATION

(11) **EP 1 780 625 A1**
(43) Date of publication of application: **02.05.2007**
(21) Application number: 05110032.9
(22) Date of filing: 26.10.2005
(51) Int. Cl.: G06F 3/00, G06F 3/023, B41J 5/00, A61F 4/00

(54) **Data input device and method and computer program product**

(71) Applicant: University of Teheran, North Kagar Ave Campus No. 2 Tehran (IR)
(72) Inventor: Oskui, Ali Mizani, Teheran (IR); Oskui, Zoreh Abbasi, Teheran (IR)
(74) Representative: Patentanwälte Kewitz & Kollegen

(57) **Abstract**

The invention relates to a method and device for inputting data into a terminal. Selected ones of five sensing means are actuated by selected ones of five fingers of a human hand during a data input time period to generate a 5-bit binary signal. The 5-bit binary signal is analyzed and decoded into data in accordance with a predetermined encoding scheme; and the data are inputted into the terminal. In a first state the fingers actuate a sensing means. This encodes a first logical state. Non-actuation of the sensing means encodes a second logical state, which is the complementary logical state of the first logical state. Thus the logical states of all five fingers encode data as a 5-bit binary signal. The 5-bit binary signal is decoded in accordance with this predetermined encoding scheme.

The method can be used for communicating with deaf and mute people or for silent data input and communication.

## Description

### FIELD OF INVENTION

The present invention relates to the input of data to a terminal and relates in particular to the input and communication of data for aurally handicapped persons, in particular for deaf-mute people, or under conditions where data input via speech or noise-generating keyboards is not suitable, such as for policemen or soldiers during missions.

### BACKGROUND OF INVENTION

Sign language is an efficient tool to support communication between aurally handicapped persons. By using the sign language, an aurally handicapped person can communicate directly with another aurally handicapped person being close to him or her with hand gestures, body gestures, face expressions etc. For remote communication transmission of the sign language is also possible using video cameras or videophone devices. Nevertheless, this approach requires a lot of training, but still does not allow communication with persons that are not capable of communicating in the sign language.

Based on the sign language many attempts have been made to enable advanced communication and data input for aurally handicapped persons. E.g. a system has been proposed in which a data glove is used and by using neural network and memorizing 256 conversational keywords, mute people can utter words by forming different states on their hands. However, this system is limited to only 256 words, which is not sufficient in many cases. Amongst others, this approach has been proposed in Mr. Hernandez-Rebollar's Doctoral Project of the George Washington University (USA), according to which American Sign Language (ASL) is converted into speech. However, ASL cannot be performed using only one hand. Instead it is necessary to use two hands, which is not possible in many situations of daily life. Furthermore, in ASL the movement of the hand, face, eyes and lips is absolutely important and even in some cases it completely changes the meaning of the words. Accordingly, ASL cannot be interpreted reliably using only data gloves. Furthermore, changing ASL gestures and combining them into grammatical sentences is very difficult and requires a lot of training. Accordingly, there exists a strong need to develop new methods for efficient and quick data input for aurally handicapped persons, in particular for deaf-mute people.

Besides communication between aurally handicapped people, there are many other situations were data input via speech or via a keyboard is not desirable. More specifically, speech recognition systems are very complex and expensive. Furthermore, a silent data input device and method might be of advantage in many occasions, e.g. when noise generated during data input via speech or a keyboard might disturb other people. Furthermore, there are many situations where an absolutely silent data input and communication is of utmost importance, e.g. for policemen or for military people at special missions. Accordingly, there exists a strong need for efficient and reliable approaches for inputting data quietly.

Also in other technical fields, there exists a strong need to develop alternative solutions for an efficient, quick and reliable data input, e.g. for inputting of data into mobile devices, such as PDAs, mobile phones etc. For this purpose, often systems with touch-sensitive displays and writing pencils using Optical Character Recognition (CR) are used. Data input via writing letters onto a touch-sensitive display is, however, not very fast and efficient.

EP 848 552 B1 discloses a sign language telephone system comprising a camera, a sign language input means providing positional data of hand gestures and a videophone device. A sign language recognition unit is used to recognize and translate the input sign language. Recognition of hand gestures is, however, difficult and not efficient.

DE 102 33 233 A1 discloses another method for recognizing dynamic gestures, wherein differential information of gestures is obtained by capturing images of movable body parts, in particular of the fingers, at regular, equidistant time intervals.

US 6,763,320 B2 discloses a simulated keyboard data input device for users with limited hand function. The device comprises a hand-worn glove having multiple sensors capable of detecting minute motion of the fingers, which are significantly smaller than typically required for keystrokes in a conventional keyboard. A sensor interpreter is individually configured to recognize a user's finger movements as respective keys of a keyboard. The user types text on a simulated keyboard by repeating those combinations of minute finger motions of which the user is capable to produce keyboards characters from the sensor interpreter. This system uses a neural network in order to interpret sensor values as keystrokes.

US 2004/0164880 A1 discloses a wearable data input device that substitutes a traditional keyboard. The device employs the same finger and wrist movements that a user employs on a keyboard, but without a keyboard. Finger positions are identified for symbols and commands by tracking a user's wrist movement in pitch and yaw. The device employs a glove adapted to fit snugly on a user's hand outfitted with necessary switches to track the user's finger and wrist movement. This approach is, however, rather complicated and requires extensive data processing, which is not desirable.

EP 1 034 468 B1 discloses an apparatus mountable to a hand of a user for enabling user-interaction with a computer. The apparatus comprises a bending sensor for sensing a bending of a user's finger. The bending sensor is operative to cooperate with the computer so that the finger's bending at an angle in a specific range corresponds to selecting a specific information item for entering into the computer. Thus, keystrokes on a traditional QWERTY keyboard are simulated in a very realistic and reliable manner. Nevertheless, the hardware to implement this approach is rather complex.

US 2004/0001097 A1 discloses another data glove input device serving as a virtual keyboard and enabling ten-finger typing. A tilt sensor is mounted on the middle phalanx of each respective glove finger to detect the falling in one of multiple tilt angle ranges of the phalanx and to select a specific item from items in a particular column. Multiple contact pads and switch buttons are mounted on the lateral sides of glove fingers to switch the same signal selected by a tilt angle or a finger to represent another different item. Thus, the finger tip can remain uncovered. This device enables baseless virtual ten-finger typing.

US 2003/0011568 A1 discloses a glove-type data input device. A sensor unit senses the change of a glove shape or a position change, and the resulting pressure at at least one contact surface, and outputs a predetermined sensing signal according to the sensing. An analyzer determines input data by analyzing the sensing signal. An output port outputs the determination result to an external terminal.

### SUMMARY OF THE INVENTION

It is an object of the present invention to provided data input device that can be operated quickly and reliably for data input using only one hand. It is another object of the present invention to provide a corresponding data input method and software (computer program product) to control such a data input method.

The above and further related objects are achieved by a data input method according to claim 1, by a computer program product according to claim 9 and by a data input device according to claim 10. Further advantageous embodiments are the subject-matter of the dependent claims.

According to a first aspect of the present invention there is provided a method for inputting data into a terminal, comprising the steps of: (a) selectively actuating selected ones of five sensing means with selected ones of five fingers of a human hand during a data input time period to generate a binary signal, preferably a 5-bit binary signal, each of said five sensing means being associated with one finger; (b) analyzing said binary signal and decoding it into data in accordance with a predetermined encoding scheme; and (c) inputting said data into said terminal; wherein actuation of an associated sensing means by a selected finger during said data input time period represents a first logical state, non-actuation of said associated sensing means by said selected finger during said data input time period represents a second logical state, which is the complementary logical state of said first logical state, and the logical states of all five fingers together during said data input time period encode data in a binary manner in accordance with said predetermined encoding scheme.

Thus, the data input device according to the present invention is operated in a manner similar to drumming with fingers onto a table or to playing certain music instruments such as wind instruments, in particular a recorder. Accordingly, the method according to the present invention can be learned as easily and quickly as learning playing such music instruments.

According to the present invention, during the data input time period it is determined for each finger whether it is in a first state or in a second state. Preferably, one of these states is the normal finger position when the hand is relaxed. This simplifies performing of the method substantially, because the finger only has to be moved into an encoding state if necessary to encode a character or control instruction.

According to the present invention it is not necessary to determine gestures or facial or body expressions. This makes the method according to the present invention very objective and free of errors.

With two different states for each finger of one hand the five fingers together can encode up to thirty-two different states, which is sufficient to encode e.g. all characters of an alphabetic system, which usually has only twenty-six characters.

Of course, the binary signal according to the present invention can also be used to encode control sequences and/or functions as well. Using a special code for a control sequence enables encoding of up to 64 different characters and/or control sequences and/or functions.

According to another embodiment of the present invention only the contact of a selected finger with a contact surface during said data input time period causes actuation of an associated sensing means for generating a respective bit of said binary signal in said first logical state. Thus, in the normal position (without actuating the sensors) the hand is held close to a surface on which the sensors are provided. The sensors are then actuated by moving the selected finger(s) downward towards the associated sensor, in a manner similar to drumming with fingers on a table or playing certain music instruments, such as recorders.

In order to avoid an erroneous actuation of sensors of the device, according to another embodiment of the present invention the respective bit is only generated if a pressure exerted upon said contact surface exceeds a predetermined threshold value. This threshold value can be adjusted e.g. in accordance with the behaviour or physical fitness of the user.

According to another embodiment, the sensors are touch sensitive switches of a data glove or of caps configured to be put onto finger tips of a human hand or touch sensitive switches disposed on a portable device.

In order to avoid erroneous actuation of the input device, according to another embodiment actuation of each of said sensing means is monitored in a time-resolved manner during a data input time period of a predetermined length. Preferably, the respective data input time period is started upon first actuation of one of said sensing means of the device. If during the same time period also other sensors are actuated this will be interpreted as the simultaneous actuation of a selected plurality of sensors in accordance with a predetermined encoding scheme. Thus, during the data input time period a binary signal is generated. This binary signal can be generated e.g. by A/D-conversion of electrical signals generated by actuation of said selected sensing means. A subsequent data input time period starts immediately after the end of the advanced data input time period or after a short blank time interval has elapsed. Thus, certain time lags between the actuation of different sensors that can never be avoided do not result in an erroneous interpretation.

According to another embodiment the binary signal is transmitted to a remote device, said device comprising a data processing means for analyzing and translating said binary signal into data. Preferably, the signal is transmitted as a binary digital signal that may also be encoded using data encryption. Of course, a data processing means for analyzing and translating the binary signal can also be provided within the data input device, e.g. within a data glove, in which case characters or even text information can be outputted by the data input device.

Another aspect of the present invention related to a computer program product comprising data code portions, which cause a data processing means to control the method steps as outlined above when loaded into and executed by said data processing means.

Another aspect of the present invention relates to a data input device configured to perform the method as outlined above. Such a data input device comprises a sensing device comprising five sensing means, each being associated with one finger of a human hand, for generating a binary signal, preferably a 5-bit binary signal, by selectively actuating selected ones of said five sensing means by selected ones of five fingers of said human hand; an analyzer for analyzing the 5-bit binary signal and decoding it into input data in accordance with a predetermined encoding scheme; and an output port for outputting input data to a terminal; wherein said data input device is configured such that (a) actuation of an associated sensing means by a selected finger during a data input time period represents a first logical state, (b) non-actuation of said associated sensing means by said selected finger during said data input time period represents a second logical state, which is the complementary logical state of said first logical state, and (c) the logical states of all five fingers together during said data input time period encode data in a binary manner in accordance with said predetermined encoding scheme.

### BRIEF DESCRIPTION OF THE DRAWINGS

In the following the invention will be described in exemplary manner referring to the enclosed drawings from which further features, advantages and objects may be derived and wherein:
- Fig. 1: shows a data input device according to a first embodiment of the present invention;
- Fig. 2: shows a schematic block diagram of a system environment used to convert data input by the device according to Fig. 1 into speech to be uttered and/or characters to be displayed on a display;
- Fig. 3: shows a data input device according to a second embodiment of the present invention;
- Fig. 4: shows a data input device according to a third embodiment of the present invention; and
- Fig. 5: shows a schematic flow diagram of a method according to the present invention.

Throughout the drawings identical reference numerals relate to identical or substantially equivalent features.

### DETAILED DESCRIPTION OF EXAMPLARY EMBODIMENTS OF THE PRESENT INVENTION

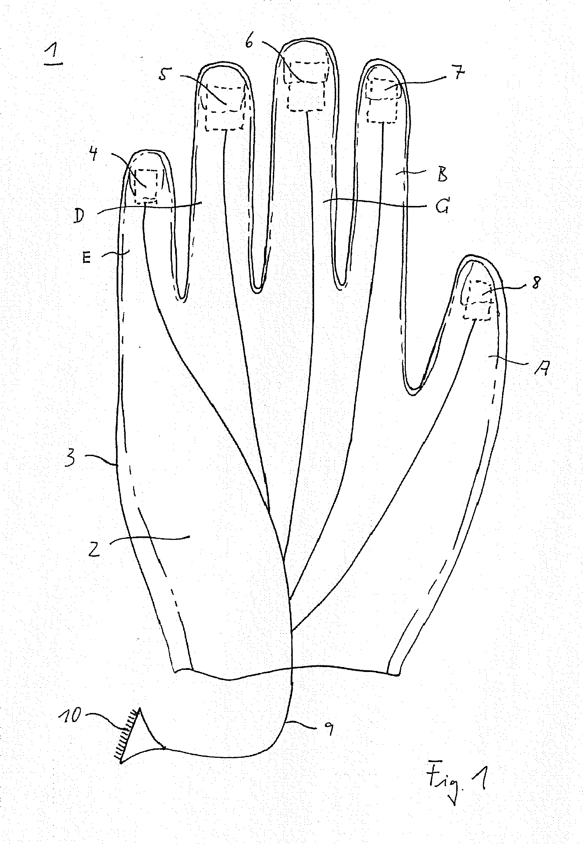

Fig. 1 shows a data input device according to a first embodiment of the present invention, wherein the hand 2 of a human being with fingers denoted by letters A-E is covered by a conventional data glove 3 with pressure or force sensors 4 to 8, each pressure or force sensor being associated to a respective one of the fingers A-E. Signals generated by the sensors 4-8 upon contact of the respective finger tip with a base (not shown) are transmitted via a cable system 9 to an output port 10, which can be connected to a data terminal (not shown) to read and process the input data, e.g. to a laptop, microcomputer, Pocket PC, PDA and the like.

As will be set forth in detail below the present invention is substantially based on the surprisingly simple idea that the five fingers of a single human hand can decode thirty-two different signs or characters. More specifically, the data input device according to the present invention comprises five sensors that can be actuated by an associated finger. In the example according to Fig. 1 a sensor is actuated and outputs a signal when a sufficient pressure is exerted on the sensor by contacting the associated finger tip against a base. Thus, the state when the finger tip contacts the base (sensor being actuated) can represent a logical 1 whereas the state when the finger tip does not contact the base (sensor not actuated) can represent a logical 0. Thus, two logical states can be encoded easily based on the position of a single finger, namely either in contact with a surface or not in contact with a surface. Thus, the five fingers of a single hand can encode 2x2x2x2x2 = 32 different states that can be represented by 5-bit binary signals. As the Western alphabetic system only has 26 characters, these 32 different states are sufficient to encode an alphabetic system using a unique encoding scheme, which will be described in more detail below.

While it has been described above that the sensor of the data input device according to Fig. 1 are pressure or contact sensors, the present invention is not limited at all to such contact-type sensors. In contrast any non-contact-type sensor suitable to distinguish between two different states of fingers of a human hand (e.g. raised or lowered, extended or bent) can be used instead. Such sensors do not necessarily require contact of the finger tips with a base or surface. E.g. in principle the detection of the state of a finger can be based on an optical detection method for detecting the state of a finger, on magnetic interaction with a probe and the like.

Referring to Fig. 1, if one of the fingers, e.g. finger C, contacts a base or surface, the associated sensor, in this case sensor 6, will be actuated and generate a certain signal. Altogether, the five fingers can be used to generate a 5-bit binary signal. As an example, if the fingers A, C and E contact the base or surface, the sensors 8, 6 and 4 will generate a voltage signal, whereas the sensors 7 and 5 will not generate a voltage (if one neglects noise and related disturbing effects). The signals thus generated are transmitted via the cables 9 to the data connector 10, which is connected with a terminal to read out the voltages generated. The voltages are then A/D-converted into a 5-bit binary signal that can be represented - in the above example - as the binary data (10101).

As will become apparent to a person skilled in the art the signals can also be communicated in a wireless manner. E.g. the signals outputted by the sensors 4 to 8 can also be communicated directly to an external device using radio communication, e.g. a Bluetooth data communication. Or the signals outputted by the sensors 4 to 8 are first transmitted to an A/D-converter in the glove 3 which then communicates the 5-bit binary signal to an external device in a wireless manner. Further, as an alternative the 5-bit binary signal generated by the above A/D-converter can also be transmitted via cables to the output port 10, which can either be connected to a data terminal or to a radio transmitter for wireless communication.

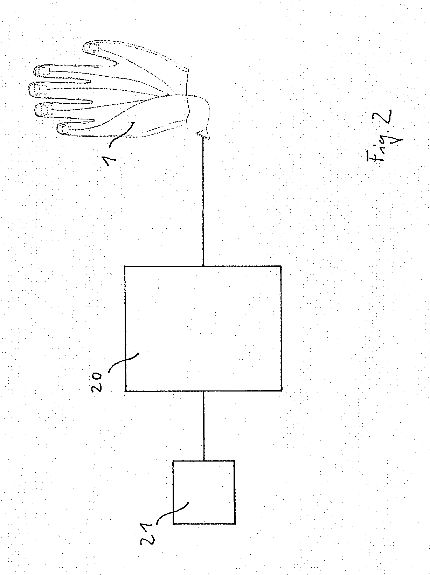

Fig. 2 shows in a schematic block diagram a system environment according to the present invention. Signals generated by the glove 1 are transmitted to a data processing unit 20, e.g. to a Computer, ASIC, PDA and the like. If the signals are transmitted as 5-bit binary signals, the data processing unit can directly translate the signals into unique characters in accordance with an encoding scheme to be described later in more detail. If the signals are transmitted as analog voltage signals, first an A/D-conversion is performed before the signals are translated into characters.

Thus, a sequence of signals is translated into a sequence of characters that can be built up to words or text information in the data processing unit. These words or this text information can be communicated to other (remote) terminals, can be saved on a data storage medium of the data processing unit 20, can be handed over to applications running on the data processing unit 20, in particular to an application running on a computer, or can be displayed on a display 21 connected to the data processing unit. Many similar applications will become apparent to a person skilled in the art when studying this brief description.

According to another embodiment, the data processing unit 20 can also implement the function of a text-to-speech-conversion. Thus, speech data could also be outputted via a loudspeaker 21 or similar audio-system based on data inputted by the device shown in Fig. 1.

As will become apparent to a person skilled in the art, the data processing unit 20 can also implement various other functions. As an example, the text data generated as outlined above can also be translated into a different language using a translation software. The translated text can be processed in any suitable manner, e.g. printed out, stored on a data storing medium, displayed on a display or uttered using a loudspeaker system. Thus, the method of inputting data using the fingers of a single hand enables in particular a communication between handicapped people, more specifically between deaf-mute people or between deaf-mute people and normally speaking people.

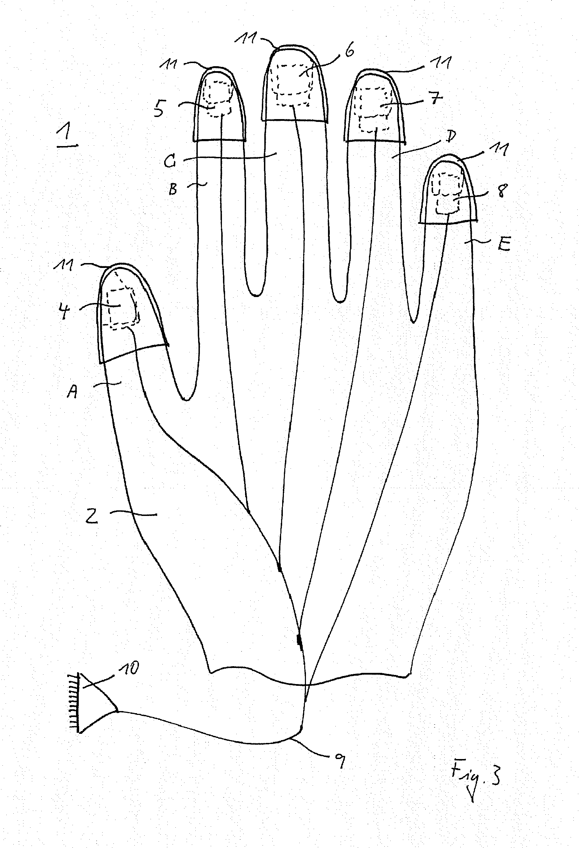

Fig. 3 shows a second embodiment of a data input device according to the present invention. According to Fig. 2, only the tips of the fingers A to E are covered by caps 11 including pressure or force sensors 4 to 8, each being associated with a finger of the hand 2. The signals generated by the sensors 4 to 8 are transmitted by the cable to an output port 10, as explained above, or can be transmitted in a wireless manner, either as analog signals or as binary encoded signals, as explained above.

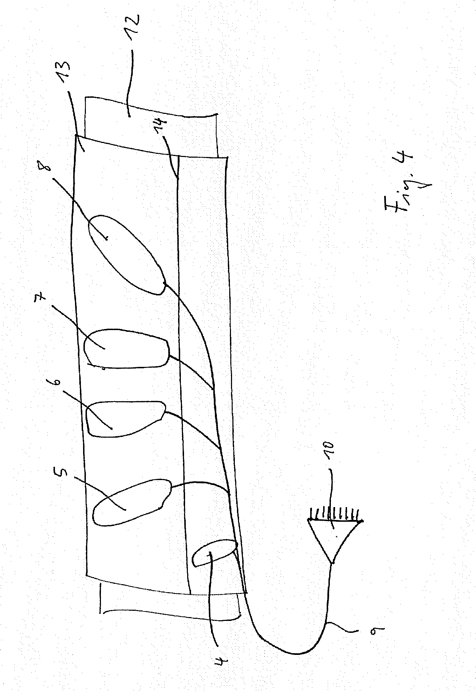

Fig. 3 shows a third embodiment of a data input device according to the present invention. The data input device is portable and comprises a cuff 13 of a flexible plastics material that can be wrapped around e.g. the forearm 12 of a human being. In order to securely fix the cuff 13 onto the forearm 12, a Velcro® fastener can be provided in order to snugly fit the cuff 13 to the forearm 12. On the outer circumference of the cuff 13, five distinct sensors 4 to 8 are provided, each being associated to a different finger of a human hand. As shown in Fig. 3, the arrangement and orientation of the sensors 4 to 8 on the cuff 13 is mated to the different length and bending of the fingers of the right hand of a human being. Thus, the fingers can easily drum onto the sensors 4 to 8 for binary encoding of characters or control instructions. Such a device can be carried easily without impeding motions of the hands and arms. If the person intends to input data, this can be done in an absolute silent manner, simply by selectively contacting the sensors 4 to 8 in accordance with an encoding scheme as outlined below in more detail. As such, the data input device according to Fig. 4 is a very helpful tool for people that want to communicate quickly in a completely silent manner, e.g. for policemen or soldiers.

Of course, a device similar to that shown in Fig. 4 can also be disposed on the outer casing or the display of a portable terminal, such as a Laptop, PDA, mobile phone etc. The geometrical dimensions of the device are sufficiently small to enable compact and lightweight electronic devices operated with the alternative concept according to the present invention for data input.

In the following the encoding scheme used according to the present invention for binary encoding of characters and control functions will be explained in more detail.

For making the utterance of words easy using the data input device according to the present invention, the following two points should be considered:
A: We should know which letters have a higher frequency;
B: we should take the way the fingers are put from easy state to difficult state into consideration.

The letters which are used more often should be associated to states that can be easily actuated using the fingers of a human hand.

According to the statistics sample, taken from difference non-specialized English books, the frequency and the order of the English letters are as summarized in Table 1.

**Table 1: Frequency of English letters in standard texts**

| D | Y | U | L | H | I | R | N | S | A | O | T | E | Letter |
|---|---|---|---|---|---|---|---|---|---|---|---|---|---|
| 2,8% | 3,2% | 4,1% | 4,5% | 6,1% | 6,5% | 6,6% | 6,7% | 7,1% | 8% | 8,4% | 8,5% | 11,2% | frequency |
| | | | | | | | | | | | | | |

| X | Q | J | Z | V | P | K | B | G | M | C | F | W | Letter |
|---|---|---|---|---|---|---|---|---|---|---|---|---|---|
| 0,11% | 0,17% | 0,19% | 0,29% | 0,68% | 0,86% | 1,1% | 1,8% | 2,1% | 2,1% | 2,1% | 2,1% | 2,7% | frequency |

By observing the above frequency of letters in English letters, according to a preferred embodiment of the present invention the encoding scheme as summarized in Table 2 is used to encode characters of the English alphabet (in Table 2, number "1" represents actuation of a sensor, e.g. by pressing down the respective finger, and number "0" represents non-actuation of a sensor, e.g. by not pressing down the respective finger):

**Table 2: Encoding scheme to encode letters of the English alphabet**

| Fingers state | means | Fingers state | means | Fingers state | means | Fingers state | means |
|---|---|---|---|---|---|---|---|
| 00000 | | 01000 | Function | 10000 | Enter | 11000 | R |
| 00001 | Blank | 01001 | V | 10001 | A | 11001 | P |
| 00010 | E | 01010 | , | 10010 | S | 11010 | Z |
| 00011 | F | 01011 | K | 10011 | G | 11011 | M |
| 00100 | T | 01100 | L | 10100 | O | 11100 | N |
| 00101 | J | 01101 | ' | 10101 | X | 11101 | Q |
| 00110 | W | 01110 | I | 10110 | B | 11110 | U |
| 00111 | H | 01111 | Y | 10111 | C | 11111 | D |

Also, other facilities are added to the system, named **Function**. The state of the function is considered for especial operations by the glove or pad. A way which is adopted for activating the function, is the press of index finger which means (01000), and then press in one of the states (00001, 00010, 00100, 01000, 10001, 10010).

Now each of the functions will be explained in more detail below:
A: Backspace Function:
   The function is activated by the index finger press and then first finger (equal to the Blank character) and finally Enter.
   This function deletes the last letter which is typed by the person. The order the fingers should be pressed is as following:
      01000
      00001
      10000
B: Repeat Function
   This function is also activated by index finger press, then the second or ring finger press (equal to E letter) and finally Enter. This function distributes the last stated sentence or word in the buffer again. For activating the function the fingers should be pressed in this order:
   01000
   00010
   10000
C: Save Function
   The mentioned function is activated by index finger press, then third or middle finger (equal to the T letter), then the Name of the related record (The unable chooses a name for it voluntarily) and finally Enter. This function saves the last distributed word or sentence in the buffer in the information bank system, in a record which name is given to the computer by fingers press. For activating the function the fingers should be pressed in this order:
   01000
   00100
   Record name
   10000
D: Load Function
   Like all the above functions, load function starts with index finger press. Then the index finger should be pressed again (It means two times the index finger should be pressed repeatedly). Then the name of the record should be given which the unable wants to load from information bank system and finally Enter. The load function is activated by the above operations. This function searches and distributes the records name which is given to the system by the same fingers press in the information bank. For activating this function fingers should be pressed in this order.
   01000
   01000
   Record name
   10000
E: Delete Function
   This function is activated by index finger press, then "A" letter and finally Enter. It deletes the last typed word or sentence of the person. The order of the fingers press should be as the following:
   01000
   10001
   10000
F: Change Language Function
   This function is activated by the index finger press, then "S" letter and finally Enter, and is used for changing language from Persian to English and vice versa the finger should be pressed as the following order:
   01000
   10010
   10000

As described before in the section save function and load Function, besides the two mentioned sections, system software has another section which is taken into consideration for previously defined information by the cripples.

The previously defined information involves sentences or words that have high frequency in conversation, and saving them in the database will ease the Cripples activities. So instead of uttering every letter of the words or sentences by fingers press, one can utter them by two or three finger presses. Unables can save unlimited number of words and sentences in this database and use it later.

### Instruction:

It seems that the only problem in using the talking glove or pad is to learn the letters and the place of letters. It is practically observed that with little Practice, one can learn the place of letter.

In order to learn to use the talking glove, we have invented ***guide-words.*** By using the guide-words, we can memorize the letters even in less than an hour. In the following part we will describe the guide-words:
For one finger state we will have:
- 10000,01000,00100,00010,00001: :Enter , Function ,T ,E ,Blank
In the case that thumb and one of the other fingers are pressed we will have:
- 11000, 10100, 10010, 10001: :ROSA
Now if we sequence the two, three, four and five finger letter repeatedly. It means two, three, four or five fingers are related in it production respectively. So we will have:
- 11000,01100,00110,00011: :RLWF
- 11100, 01110, 00111: :NIH
- 11110,01111,11111: :UYD
And in the case that one or two finger (except the side fingers) is up respectively we will have:
- 10111, 11011, 11101: :CMQ
- 10011, 11001: :GP
For learning the rest of the letters, we use complementary way (change zero to one and vice-versa) just as below:

| complement | | |
|---|---|---|
| 10100 | 01011 | :OK |
| 01010 | 10101 | :,X |
| 00101 | 11010 | :JZ |
| 10010 | 01101 | :S' |
| 01001 | 10110 | :VB |

| | | |
|---|---|---|
| Note: pay attention to the rational relationship among ("O" "," "J")(101 is moving to the right) and also pay attention to the rational relationship ("S" "V") (1001 is moving to the right). | | |

The method according to the present invention is not only limited to English language, and can be developed to be used in other languages. As an example, the system can also be used both for Persian and English language.

The letters of the Persian alphabet can be encoded by the fingers of a single hand using the encoding scheme as summarized in Table 3 below: (In Table 3, the Persian number "1" represents actuation of a sensor, e.g. by pressing down the respective finger, and the Persian number "0" represents non-actuation of a sensor, e.g. by not pressing down the respective finger):

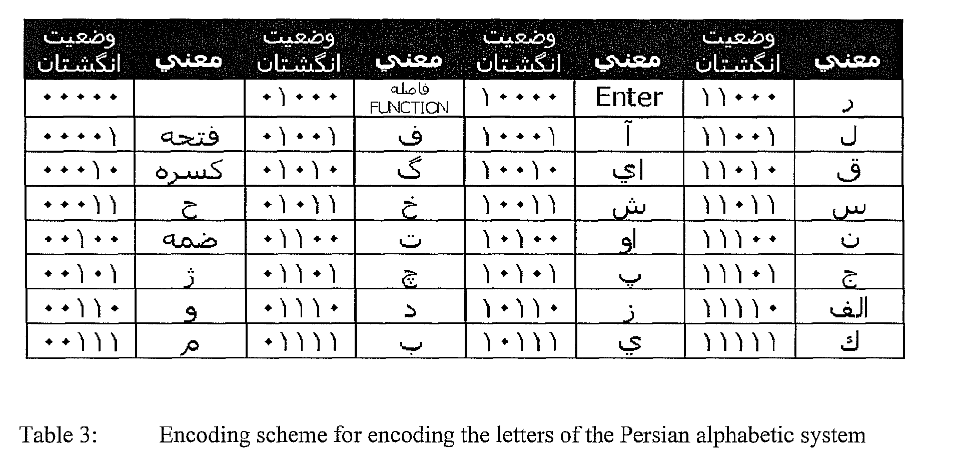

Humans want to talk and immediately utter what they think and want to say. Therefore, the speed of the data input device according to the present invention is considered as a crucial parameter. In the following, a rough estimation of the speed of the data input device according to the present invention will be given.

As will become apparent from the above description, inputting of data using the data input device according to the present invention is rather similar to the action of 'finger drumming' that can often be observed for nervous people or to the action of playing of certain music instruments, in particular to the playing of wind instruments. There are no hand movements in playing most of the wind instruments instead they are played with finger movement. As is well known, wind instruments can be played at very high speed. Even beginners who learn to play wind instruments can easily play sequences involving eight finger movements per second. More advanced players can even play up to 16 different tones per second, which corresponds to 16 different finger movements per second. As a comparison, in English or Persian language we utter usually eight characters per second when slowly speaking and approx. twelve characters per second when speaking at normal speed. Thus, the data input speed that can be obtained according to the present invention is more than sufficient for fluent communication, even speech communication for deaf-mute people. It is noted that certain wind instruments, such as recorders, can be learned very easily. Thus, operating the data input device according to the present invention can be learned very easily and quickly. Experiments of the inventors revealed that it is possible to learn the fundamental 'alphabet' or encoding scheme according to the present invention within a rather short time and to communicate at high speed, even in the beginning practically at slow speaking speed, nearly without making errors. Of course, the data processing unit 20 shown in Fig. 2 can also be provided with a language and grammar checking module so that obvious input errors can be corrected automatically.

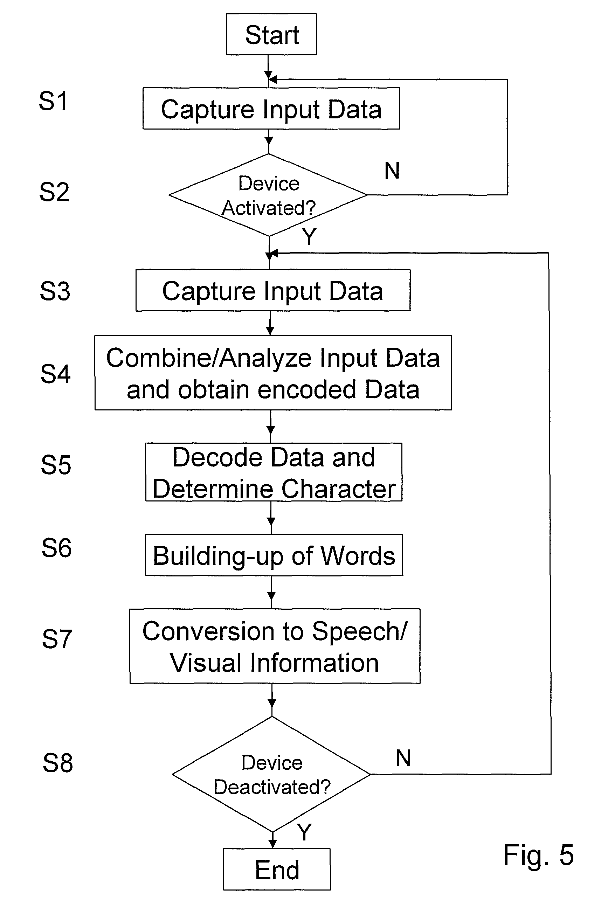

In the following an exemplary method according to the present invention will be described with reference to Fig. 5. According to Fig. 5, the data input device continuously captures data (step S1). In step S2 it is determined whether the data input device is active or not. If not, the captured data are rejected, otherwise, the method proceeds with step S3. Deactivation of the data input device can be performed e.g. by actuating a dedicated switch in order to ensure e.g. that the user has both hands free for use. Of course, activation/deactivation can also be performed by determining special control sequences in the stream of input data captured in step S1.

Data that are input during step S3 are not rejected. More specifically during step S3, time is subdivided into certain time intervals referred to above as data input time periods and during each data input time period a 5-bit binary signal is detected encoding a character and/or control sequence and/or function. Thus, by repeatedly executing step S4, a sequence of data encoding a sequence of characters and/or control sequences and/or functions is obtained.

During the data input time period, some kind of thresholding or data analysis of the input signals can be performed. E.g. it can be determined, how long a finger actuates a touch-sensitive switch. If it is determined that the touch-sensitive switch is only actuated for a very short time this is interpreted as an accidental actuation that will be disregarded. Or the pressure or force exerted onto a touch-sensitive sensor field can be determined. Only if the pressure or force detected exceeds a preset threshold value will the input signal be considered and further processed as an input signal for binary encoding of input data.

In step S5, the data thus obtained are then decoded or translated into characters and/or control sequences and/or functions, in accordance with an encoding scheme as outlined above. The characters thus determined can be used to build up words or text information (step S6) and can be used for conversion into speech (to be outputted via a loudspeaker or audio system) and/or visual information, e.g. text information or graphics information to be displayed on a display connected to the terminal, e.g. an LCD of a PDA or Pocket PC.

If the device has not been deactivated (which is checked in step S8) the method jumps back to step S3 to repeat the determination of a character inputted subsequently. Otherwise, the method stops and returns back to step S 1.

As will become apparent to a person skilled in the art, the data input device according to the present invention can not only be used for inputting characters but also for inputting of complex control instructions. As an example, one might consider the inputting of control instructions to remote machines in order to control their operation, e.g. the operation of a crane or a working machine, provided that the remote machine can be instructed using a set of instructions (or control sequences) of less than thirty-two different instructions (or control sequences). Thus, the encoding scheme as outlined above can also be used to encode other information.

### LIST OF REFERENCE NUMERALS

- 1: Data input device
- 2: Palm
- 3: Glove
- 4: Pressure sensor
- 5: Pressure sensor
- 6: Pressure sensor
- 7: Pressure sensor
- 8: Pressure sensor
- 9: Data line
- 10: Data connector
- 11: Cap
- 12: Forearm
- 13: Cuff
- 14: Velcro® fastener

- 20: Data processing unit
- 21: Data conversion unit / Display

- A-E: fingers of human hand

## Claims

1. A method for inputting data into a terminal (20), comprising the steps of:
selectively actuating selected ones of five sensing means (4-8) with selected ones of five fingers (A-E) of a human hand (2) during a data input time period to generate a binary signal, each of said five sensing means (4-8) being associated with one finger;
analyzing said binary signal and decoding it into data in accordance with a predetermined encoding scheme; and
inputting said data into said terminal (20); wherein
actuation of an associated sensing means (4-8) by a selected finger during said data input time period represents a first logical state,
non-actuation of said associated sensing means (4-8) by said selected finger (A-E) during said data input time period represents a second logical state, which is the complementary logical state of said first logical state, and
the logical states of all five fingers (A-E) together during said data input time period encode data in a binary manner in accordance with said predetermined encoding scheme.

2. The method of claim 1, wherein said binary signal is a 5-bit binary signal encodes characters of an alphabetic system and/or control sequences and/or functions.

3. The method of any of the preceding claims, wherein contact of a selected finger (A-E) with a contact surface (4-8) during said data input time period causes actuation of an associated sensing means (4-8) for generating a respective bit of said binary signal in said first logical state.

4. The method of claim 3, wherein said bit is generated if a pressure exerted upon said contact surface (4-8) exceeds a predetermined threshold value.

5. The method of any of the preceding claims, wherein said step of actuating comprises actuating touch sensitive switches (4-8) of a data glove (3) or of caps configured to be put onto finger tips of a human hand (2) or actuating touch sensitive switches (4-8) disposed on a portable device (13).

6. The method according to any of the preceding claims, wherein actuation of each of said sensing means (4-8) is monitored in a time-resolved manner, said data input time period has a predetermined length and is started upon first actuation of one of said sensing means (4-8) and wherein actuation of selected ones of said sensing means during said data input time period is translated into said binary signal by A/D-conversion of electrical signals generated by actuation of said selected sensing means.

7. The method of any of the preceding claims, wherein said binary signal is transmitted to a remote device (20), said device comprising a data processing means for analyzing and translating said binary signal into data.

8. The method of any of the preceding claims, wherein said step of analyzing and decoding comprises decoding said binary signal into a character of an alphabetic system and further comprising the step of converting a sequence of characters thus obtained into written words, which are displayed on a display (21), or into speech, which is uttered by a loudspeaker.

9. A computer program product comprising data code portions, which cause a data processing means to control the method steps of any of the preceding claims when executed by said data processing means.

10. A data input device, comprising:
a sensing device (1) comprising five sensing means (4-8), each being associated with one finger (A-E) of a human hand (2), for generating a binary signal by selectively actuating selected ones of said five sensing means by selected ones of five fingers (A-E) of said human hand (2);
an analyzer (20) for analyzing the binary signal and decoding it into input data in accordance with a predetermined encoding scheme; and
an output port (10) for outputting input data to a terminal (21);
said data input device being configured such that:
actuation of an associated sensing means (4-8) by a selected finger during a data input time period represents a first logical state,
non-actuation of said associated sensing means (4-8) by said selected finger (A-E) during said data input time period represents a second logical state, which is the complementary logical state of said first logical state, and
the logical states of all five fingers (A-E) together during said data input time period encode data in a binary manner in accordance with said predetermined encoding scheme.

11. The device according to claim 10, being configured such that said binary signal is a 5-bit binary signal used to encode characters of an alphabetic system and/or control sequences and/or functions.

12. The device of claim 10 or 11, wherein said sensing means each comprises a contact surface (4-8) such that contact of a selected finger (A-E) with a contact surface (4-8) during said data input time period causes actuation of an associated sensing means (4-8) for generating a respective bit of said binary signal in said first logical state.

13. The device of claim 12, wherein a thresholding means is associated with each sensing means such that said bit is generated if a pressure exerted upon said contact surface (4-8) exceeds a predetermined threshold value.

14. The device of any of claims 10 to 13, wherein said sensing device is a data glove having touch sensitive switches (4-8) or comprises caps each being configured to be put onto a finger tip of a human hand (2) or comprises touch sensitive switches (4-8) disposed on a portable device (13).

15. The device according to any of claims 10 to 14, further comprising a detecting means for monitoring actuation of said sensing device (4-8) in a time-resolved manner, said detecting means being configured such
that said data input time period has a predetermined length and is started upon first actuation of one of said sensing means (4-8) and
that actuation of selected ones of said sensing means during said data input time period is translated into said binary signal by A/D-conversion of electrical signals generated by actuation of said selected sensing means.

16. The device of any of claims 10 to 15, further comprising transmission means for transmitting said binary signal or the decoded data to a remote device (20).

17. The device of any of claims 10 to 16, wherein said analyzer (20) is configured for analyzing and decoding said binary signal into a character of an alphabetic system, further comprising converting means for converting a sequence of characters thus obtained into written words or into speech.
